# EUROPEAN PATENT SPECIFICATION

(11) **EP 2 359 534 B1**
(45) Date of publication and mention of the grant of the patent: **07.05.2014**
(21) Application number: 08879013.4
(22) Date of filing: 15.12.2008
(51) Int. Cl.: H04L 12/26

(54) **DETECTING AN UNRELIABLE LINK IN A COMPUTER SYSTEM**
DETEKTIEREN EINER UNZUVERLÄSSIGEN VERBINDUNG IN EINEM COMPUTERSYSTEM
DÉTECTION D'UNE LIAISON NON FIABLE DANS UN SYSTÈME INFORMATIQUE

(43) Date of publication of application: 24.08.2011
(73) Proprietor: Hewlett-Packard Development Company, L.P., Houston, TX 77070 (US)
(72) Inventor: BOCKHAUS, John, Fort Collins CO 80528-9544 (US); NUGENT, Patrick, B., Fort Collins CO 80528-9544 (US); ANDERS, Valentin, Cupertino CA 95014-0691 (US); VASEK, Pavel, Fort Collins CO 80528-9544 (US)
(74) Representative: Hutchinson, Glenn Stanley
(86) International application number: PCT/US2008/086790
(87) International publication number: WO 2010/071628

(56) References cited:
- EP-A2- 0 399 491
- EP-A2- 0 952 700
- EP-A2- 0 952 700
- WO-A1-96/20549
- US-A1- 2003 058 800
- US-A1- 2008 010 661
- US-B2- 6 754 854
- US-B2- 6 775 237

## Description

### TECHNICAL FIELD

The present disclosure is generally related to computer systems and, more particularly, is related to analysis of communication links in computer systems.

### BACKGROUND

Many computer systems utilizing serial links measure errors that occur on the links with a single counter per link. These systems may poll the counter and determine whether a link needs to be repaired.

Other systems expand on this approach by creating a window of time over which errors are counted. Once the time period had expired, the counter is cleared. This counter may have a threshold, where if the threshold is exceeded, an error is logged and/or an error message is sent to management hardware/software.

EPO 952 700 describes a network repeater having a plurality of repeater ports that selectively establishes links with remote nodes at one of two data rates based on the capabilities of the remote network and a determined link integrity.

US 2003/0058800 relates to a system for directing an active control path link as a communication link between a control shelf and a controlled shelf in a multi-shelf network element. The system includes an assessment module adapted to assess health of transmissions sent through control path links.

US 2008/0010661 describes techniques for identifying a defective communication channel in a communications network.

### SUMMARY

Embodiments of the present disclosure provide systems and methods for analyzing reliability of a communication link. One embodiment of such a system comprises a link control component that controls the communication link, where the link control component couples to a processor and a diagnostic component. The diagnostic component is configured to determine whether transmission errors have occurred on the communication link exceeding or matching a first programmable threshold over a range of multiple periods of time that exceeds or matches a second programmable threshold.

One embodiment of a method for analyzing reliability of a communication link, among others, can be broadly summarized as follows: receiving an indication that an error has been detected in a transmission over the communication link and determining whether transmission errors have occurred on the communication link exceeding or matching a first programmable threshold over a range of multiple periods of time that exceeds or matches a second programmable threshold, the first programmable threshold and the second programmable threshold being determined from register values.

Embodiments of the present disclosure also include a computer readable storage medium embedded with instructions for analyzing reliability of a communication link. In one embodiment, the instructions when executed by a computer cause the computer to perform receiving an indication that an error has been detected in a transmission over the communication link and determining whether transmission errors have occurred on the communication link exceeding or matching a first programmable threshold over a range of multiple periods of time that exceeds or matches a second programmable threshold, the first programmable threshold and the second programmable threshold being determined from register values.

Other systems, methods, features, and advantages of the present disclosure will be or become apparent to one with skill in the art upon examination of the following drawings and detailed description. It is intended that all such additional systems, methods, features, and advantages be included within this description and be within the scope of the present disclosure.

### BRIEF DESCRIPTION OF THE DRAWINGS

Many aspects of the disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 is a block diagram of an exemplary architecture for interconnecting peripherals in a computing platform in accordance with the present disclosure.
FIGs. 2-4 are representative diagrams of status registers used to control aspects of the diagnostic logic of FIG. 1.
FIGs. 5-6 are flow chart diagrams describing embodiments of a process of diagnostic operation in accordance with the system of FIG. 1.

### DETAILED DESCRIPTION

Generally, computer systems communicate between nodes or network connection points using communication links. Embodiments of the present disclosure employ diagnostic logic or component that detects a faulty link in a computer system before the link fails completely (a hard failure). One embodiment of the diagnostic logic distinguishes between single error sequences that occur on the link and the slow degradation of the link itself, where a degradation of the link may indicate that the link is soon to become unreliable and a repair should occur. It is noted that slow degradation of some component does not generally require a link to be retrained to stop using a faulty lane. Generally, the lane still works but occasionally errors occur and more and more errors occur over time that will eventually cause a hard error to occur on the link. The diagnostic logic 134 attempts to catch this type of problem before the hard failure occurs.

The communication links across which computers or parts of computers communicate may be serial in that a single stream of data is transmitted across the link. Serial links are generally known to have a low rate of correctable errors. Examples of serial communication architectures include RS-232, RS-423, RS-485, Universal Serial Bus, FireWire®, Ethernet, Fibre Channel, InfiniBand®, PCI (Peripheral Component Interconnect) Express, SONET, SDH, T-1, E-1, etc.

Several communication standards have emerged based on high bandwidth serial architectures. These include HyperTransport®, RapidIO®, StarFabric®, and Intel QuickPath Interconnect®.

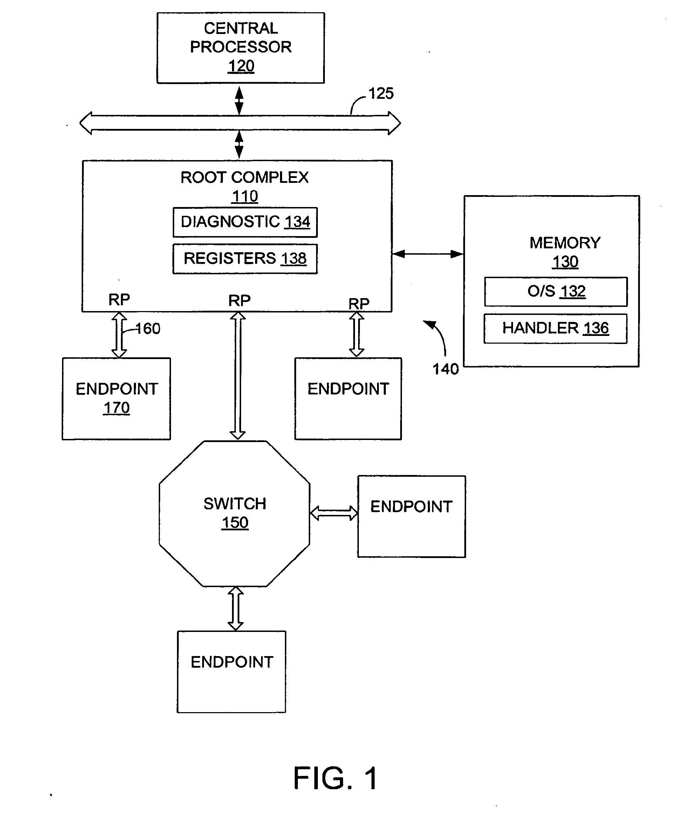

FIG. 1 is a block diagram of a PCI Express (PCIe) architecture for interconnecting peripherals in a computing platform. PCIe is often used as a backplane system in computing systems. Use of PCIe in the figure is for illustration purposes and is not meant to be limiting. Other serial communication architectures may also be used in other embodiments.

In the computing platform of FIG. 1, a link control component, such as root complex (RC) device 110, connects a central processor 120 and memory subsystem 130 to the PCI Express switch fabric 140 comprised of one or more switch devices 150. The root complex device 110 generates transaction requests on behalf of the processor 120, which is interconnected through a local bus 125. As well, the root complex 110 generates memory and input/output (I/O) requests.

Root complex functionality may be implemented as a discrete device, or may be integrated with the processor 120. Software in the memory 130 may include a basic input output system (BIOS) (omitted for simplicity) and suitable operating system (O/S) 132. The BIOS is a set of software routines that initialize and test hardware at startup, start operating system (O/S) 132, and support the transfer of data among the hardware devices. The BIOS is stored in ROM so that the BIOS can be executed when the computing platform is activated. As demonstrated, diagnostic logic 134 and registers 138 are located in the root complex device 110. In another embodiment, diagnostic logic 134 may be located at an endpoint or main memory.

A root complex 110 may contain more than one PCI Express port (RP) and multiple switch devices 150 can be connected to ports on the root complex 110 or cascaded. Endpoints 170 (e.g., a Gigabit Ethernet controller with a PCI Express system interface, graphics processing unit, storage controllers, etc.) complete or request PCI Express transactions.

PCIe implements a dual-simplex link 160 where data is transmitted and received simultaneously on a transmit and receive lane of the link 160. A connection between any two PCIe devices is known as a link 160 and is built from a collection of one or more lanes, where the number of lanes is configurable.

The root port (RP) within the root complex (RC) 110 detects errors related to the transmission of packets within the PCIe fabric 140. Some errors are detected in packets that are received by the root port (RP). Some errors are inferred due to the reception of a NAK (negative acknowledgment) or due to a replay timeout. These errors received by the root complex 110 result in status registers 138 being updated and the error being conditionally reported to the appropriate software error handler 136 or handlers. Software error handlers 136 will initially read root complex status registers 138 to determine the nature of the error and may also read device-specific error registers of the device that reported the error.

Accordingly, PCIe defines a variety of mechanisms used for checking errors, reporting those errors, and identifying the appropriate hardware and software elements for handling these errors. PCIe error checking focuses on errors associated with the PCIe interface and the delivery of transactions between requester and completer functions. In accordance with PCIe protocol, errors are categorized into three classes that specify the severity of an error and define the entity that should handle the error based on its severity. These categories include correctable errors which are handled by hardware of the PCI Express fabric, uncorrectable errors-nonfatal which are handled by device-specific software, and uncorrectable errors-fatal which are handled by system software.

Regarding correctable errors, these errors may have an impact on performance (e.g., latency and bandwidth) but no information is lost as a result of the error. These types of error can be reported to software of the appropriate PCI Express device, which can take a variety of actions including: logging the error; updating the calculations of PCIe performance; and tracking errors to project possible weaknesses within the fabric 140. Tracking errors can isolate areas where greater potential exits for fatal errors in the future. With embodiments of the present disclosure, correctable error rates are analyzed by diagnostic logic 134 to determine whether a communication link 160 is in the process of degrading but has not yet reached the point to cause uncorrectable errors to be detected.

For example, in one embodiment of the diagnostic logic 134, if the correctable error rate exceeds or matches a multi-level programmable threshold, the link 160 is deemed to have degraded in its operation which may be indicative of a hard failure of the link 160 in the near future. Therefore, it may be desirable to stop using that link 160 or to replace it before a hard failure occurs which may cause unscheduled downtime of the computer system.

To illustrate, in one embodiment, one scheme of the diagnostic component or logic includes the following components: a programmable time window, an event counter, a programmable event threshold, a period counter, and a programmable period threshold. In one embodiment, the counters are implemented using hardware registers. While embodiments have been illustrated in the exemplary context of a PCI Express link 160, other embodiments of the scheme could be used with any link or communications channel which can tolerate a certain level of correctable errors.

In the above scheme, the event counter is incremented whenever a correctable error occurs on the link 160 being analyzed. After the time window expires, the event counter is cleared. Note that the event counter can be programmed to, but not limited to, count one or more (e.g., 1 to 5) distinct PCIe correctable errors. Possible correctable errors include a) DLLP (data link layer packet) CRC (cyclic redundancy check) errors (inbound); b) TLP (transaction layer packet) LCRC (Link CRC) errors (inbound); c) Receiver errors (inbound); d) NAK's (negative acknowledgements) received (*i.e*., outbound LCRC); e) Replay timeout (outbound). Each of these signals indicates that a correctable error occurred on the link 160.

If the event counter exceeds or matches the programmable event threshold, the period counter is incremented (just once in that time or period window). The period counter counts consecutive periods where the event threshold has been exceeded or matched. If a time period goes by that does not exceed or match the event threshold, the period counter is cleared. If the period counter exceeds or matches the period threshold, this means the link 160 has significantly degraded and a problem exists.

Several actions may then be taken by the diagnostic logic 134: An error can be logged in an error log in hardware (or software) of the PCIe fabric. In addition, an interrupt can be sent to management hardware. This management hardware of the PCIe fabric may choose to send a human-readable message to the operator of the system or to a field service center, indicating that a specific link needs to be repaired. Alternatively, the management hardware could initiate a dynamic switchover whereby all traffic destined for the problematic link is re-directed over a different link.

It is noted that multiple levels or thresholds are used to indicate an error before a problem is realized by the diagnostic logic 134. For example, a burst of errors caused by a single event (maybe a noise event causes more than one bit to flip in a transmission) can cause multiple errors to be detected on a communication link 160 (by a device at RP or endpoint). As long as the errors are contained within a diagnostic window or period (or maybe two periods since the burst of errors may straddle a boundary) and as long as the diagnostic window threshold is set to a value of three or more, diagnostic logic 134 ignores the burst of errors caused by a single event. In prior designs, where multiple levels or thresholds are not used, the burst of errors would look like a lot of errors although it is really only a single event.

With embodiments of the diagnostic logic 134, a sustained error rate not caused by a single event is detected. In particular, the diagnostic logic 134 detects a problem by noticing that multiple event thresholds are reached for a sustained period of time. In response, to indicate a failure of the link being monitored, the diagnostic logic 134 may notify a user, send interrupts to O/S 134, etc.

To illustrate how the above-described process may work in one embodiment, several examples are provided. In a first example, assume diagnostic counters have been set with the following values: time period = 1 second; error threshold = 1; period threshold = 4. To cause a problem to be signaled with these assigned values, the diagnostic logic 134 would need to observe at least 1 PCIe error in each of four consecutive one-second periods.

Next, in the following example, the time period or window has been set to 1 second; the event threshold has been set to 100 errors; and the period threshold is set to 5 periods. Each of these values is programmable by a user.

Assume for the above example, there is a gamma ray strike that causes a bit to be flipped in a packet that is being transmitted over the link 160. This is a single error event. Although the event counter will increment as a result of the flipped bit, this does not exceed or match the event threshold if the flipped bit is the only error.

Now assume an EMI (electromagnetic interference) event occurs which causes loss of symbol lock in a chipset. This would cause a stream of errors on the link 160 until the link was re-trained. In this example, the event counter will count above 100 within 1 second. This will cause the period counter to increment as well. However, assume that re-training is completed in less than 1 second, so only 1 period (or maybe 2 periods) will have exceeded or matched the event threshold. As a result, the period threshold is not exceeded or matched as a result of the EMI event.

Next, assume for the above example, there is a slowly degrading connector pin on a chipset. Suppose this causes correctable errors at a rate of about 10 every second. Slowly, the rate of correctable errors increases to 100 every second. The period counter will start incrementing. Since this is an error rate that is sustained, 5 periods in a row will exceed or match the period threshold, and now the error event is severe enough that it may need to be reported by diagnostic logic 134 and possibly repaired.

Therefore, the diagnostic logic 134 may be able to detect a slowly degrading communication link 160 before it completely fails. By looking at correctable error rates over many consecutive time windows or periods, diagnostic logic 134 can ignore transient errors and flag error rates which persist over the larger time windows or periods.

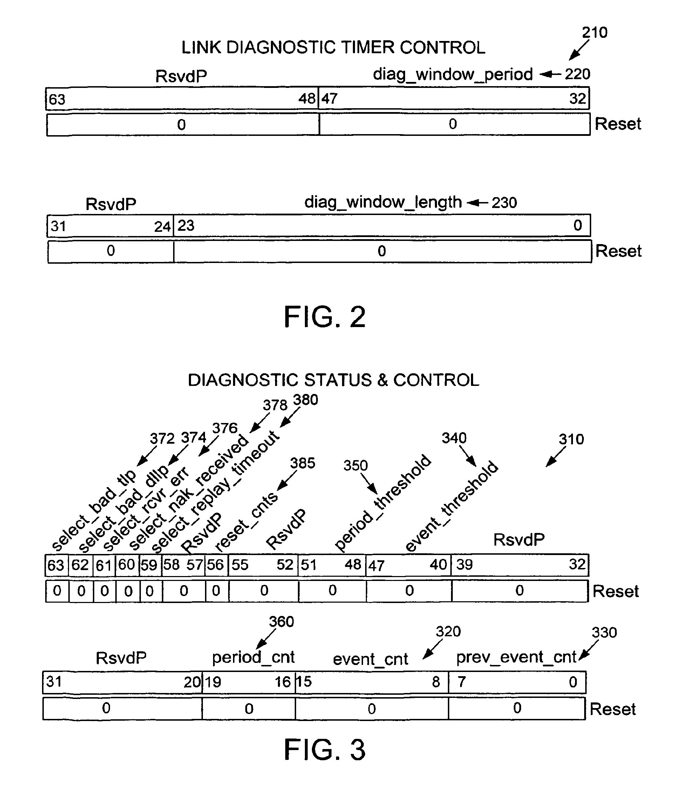

The set of status registers 138 used to control aspects of the diagnostic logic 134 may include a register (common for the entire root complex) that defines the length of the time window or period. This status register is referred as a Link Diagnostic Timer Control (see FIG. 2) which programs the timers that define the diagnostic window (common for all events of both directions of all root ports).

The values in the Link Diagnostic Timer Control register 210 control the timers/counters that define the length of the diagnostic time window or period used by the diagnostic logic 134 in the root complex 110. Two separate counters are used for this purpose. The first counter (diagnostic window period timer 220) converts an input root complex management master tick signal into an intermediate diagnostic tick signal. The second counter (diagnostic window length timer 230) determines the actual length of the diagnostic window or period. The window defines the time interval during which the diagnostic logic 134 counts the occurrences of certain link events, as specified by the Link Diagnostic Status & Control registers (see FIGs. 3-4) of the individual root ports. Note, in one embodiment, any write to the Link Diagnostic Timer Control register 210 resets both diagnostic window timers.

A diag_window_period value for the Link Diagnostic Timer Control register 210 controls the diagnostic window period timer 220 and defines the period of the diagnostic tick signal that the timer generates as its output. This signal is in turn used as the input for the diagnostic window length timer 230. The period of the diagnostic tick signal is equal to the period of the common root complex management master tick signal (e.g., 1 microsecond) multiplied by diag_window_period value. When the diagnostic logic 134 is used, diag_window_period may be set to 16'd10000 in one embodiment, thus making the period of the diagnostic tick signal equal to 10 ms. Setting diag_window_period value to 0 resets and stops the diagnostic window period timer 220 and prevents the generation of any pulses on the diagnostic tick signal.

A diag_window_length value for the Link Diagnostic Control register 210 controls the diagnostic window length timer 230 and defines the length of the diagnostic window as diag_window_length periods of the diagnostic tick signal (e.g., diag_window_length*10 ms). In one embodiment, a 24-bit width of the diag_window_length field allows a maximum length of the diagnostic window of over 46 hours. At the end of each diagnostic window or period, the diagnostic window length timer generates a pulse on a special signal (diagnostic window boundary). This pulse serves as an indication to the link event counters in the Link Diagnostic Status & Control registers (see FIGs. 3-4) of the individual root ports that their "current" event counter values should be transferred to the "previous" counters and the current counters should again start counting the selected events from 0. Setting the diag_window_length value to 0 resets and stops the diagnostic window length timer and prevents the generation of any pulses on the diagnostic window boundary signal.

The set of status registers 138 used to control aspects of the diagnostic logic 134 may further include a register (RPx Link Diagnostic Status & Control) per link/RP that will define/hold, for each of the two directions of the link 160, the following: the event count threshold; the current and previous event counts; and the Enable bits for each error type for the direction. Further, this register may also enable the resetting of the event counts for a particular direction of the link/RP. This may be useful when the Enable bits for the error types being tracked change. If multiple Enable bits for a direction/link are set, the diagnostic logic 134 will count all cycles when any of the enabled error types occurs.

The Diagnostic Status & Control register 310 (see FIG. 3) is used to control the diagnostic logic of each RP's link and to read the values of the event counters. This register 310 programs the event selection masks and the threshold values for the current event counts. They also contain the current and previous event count values and the reset_counts bits.

The diagnostic logic 134 can count the occurrences of certain events on each link 160 during the current diagnostic window (defined by the programming of the Link Diagnostic Timer Control register 210). The types of events that can be counted include Bad TLP, Bad DLLP, Receiver Error (these three events are detected/triggered by the inbound link logic), and NAK Received and Replay Timer Timeout (these two are detected by the outbound link logic). The actual event types to be counted are selected via their select masks; if more than a single event type is selected, all cycles during which any of the selected events occur will be counted. The number of the occurrences of the selected event(s) so far during the current diagnostic window is indicated in the event_cnt field 320; at the boundary between every two diagnostic windows, the current value of the event_cnt field is automatically transferred to the prev_event_cnt field 330 and the event_cnt field 320 starts counting again the selected events that occur in the new diagnostic window.

The period_cnt field 330 is reset to 0 at the end of every diagnostic window if the value of event_cnt 320 reached during this window is less than the value of the event_threshold field 340; if, on the other hand, the value of event_cnt 320 at the end of the window is equal to or more than event_threshold 340, the period_cnt field 330 is incremented. Thus, period_cnt 330 indicates the number of the consecutive diagnostic windows immediately preceding the current window in which event_cnt 320 reached or exceeded the event_threshold value 340. If the value of period_cnt 330 reaches the value in the period_threshold field 350, all further event and period counting is blocked, the values in the period_cnt 360, event_cnt 320, and prev_event_cnt 330 fields are frozen (*i.e*., no transfer occurs from event_cnt to prev_event_cnt), and an HCE (Hardware-Corrected Error) event is generated and sent to the status registers. Software may then write a 1 to the reset_cnts bit 385 to reset all counts to 0 and unblock subsequent event and period counting. If the value of either event_threshold 340 or period_threshold 350 is 0, no event/period counting is performed and no HCE event is generated for this root port (RP). For example, the diagnostic logic 134 may form a single HCE event for the status registers 138 by OR-ing together these events from all RPs.

A select_bad_tlp value 372 for the Diagnostic Status & Control register 310 acts as the select mask for the "Bad TLP" event type on the inbound link. A value of 1 selects the event for counting and a value of 0 makes the diagnostic logic 134 ignore it.

A select_bad_dllp value 374 for the Diagnostic Status & Control register 310 acts as the select mask for the "Bad DLLP" event type on the inbound link. A value of 1 selects the event for counting and a value of 0 makes the diagnostic logic 134 ignore it.

A select_rcvr_err value 376 for the Diagnostic Status & Control register 310 acts as a select mask for the "Receiver Error" event type on the inbound link. A value of 1 selects the event for counting and a value of 0 makes the diagnostic logic 134 ignore it.

A select_nak_received value 378 for the Diagnostic Status & Control register 310 acts as a select mask for the "NAK Received" event type on the outbound link (e.g., a NAK received from the inbound link for a TLP previously sent on the outbound link). A value of 1 selects the event for counting and a value of 0 makes the diagnostic logic 134 ignore it.

A select_replay_timeout 380 for the Diagnostic Status & Control register 310 acts a select mask for the "Replay Timer Timeout" event type on the outbound link. A value of 1 selects the event for counting and a value of 0 makes the diagnostic logic 134 ignore it.

Writing a 1 to the reset_cnts value 385 for the Diagnostic Status & Control register 310 resets to 0 the values of all counters (period_cnt 360, event_cnt 320, and prev_event_cnt 330) and unblocks subsequent event and period counting.

A period_threshold value 350 for the Diagnostic Status & Control register is the value of the period_cnt field 360 that, if reached, blocks further event and period counting and triggers the sending of an HCE (Hardware-Corrected Error) event into the status registers 138. If this value is 0, no event or period counting is performed and no HCE event can be generated for the RP.

An event_threshold value 340 for the Diagnostic Status & Control register 310 is the value of the event_cnt field 320 that, if reached or exceeded during a diagnostic window, causes the period_cnt field 360 to be incremented at the end of the window. If the value of event_cnt 320 at the end of the window is less than event_threshold 340, the period_cnt field 360 is reset to 0 instead of being incremented. If this value is 0, no event or period counting is performed and no HCE event can be generated for the RP.

A period_cnt value 360 for the Diagnostic Status & Control register 310 is the number of the consecutive diagnostic windows immediately preceding the current window in which event_cnt 320 reached or exceeded the event_threshold value 350. This field is frozen (and all further event and period counting is blocked) if it reaches the value of period_threshold 360.

An event_cnt value 320 for the Diagnostic Status & Control register 310 is the event count of the selected event(s) reached so far during the current diagnostic window. This field is frozen (and all further event and period counting is blocked) if the period_cnt field 360 reaches the value of period_threshold 350.

A prev_event_cnt value 330 for the Diagnostic Status & Control register 310 is the final event count of the selected event(s) reached in the event_cnt field 320 during the previous diagnostic window and transferred to this field at the boundary between the previous and the current diagnostic windows (unless period_cnt 360 reaches the value of period_threshold 350 at this boundary, in which case the transfer from event_cnt 320 to prev_event_cnt 330 is not performed).

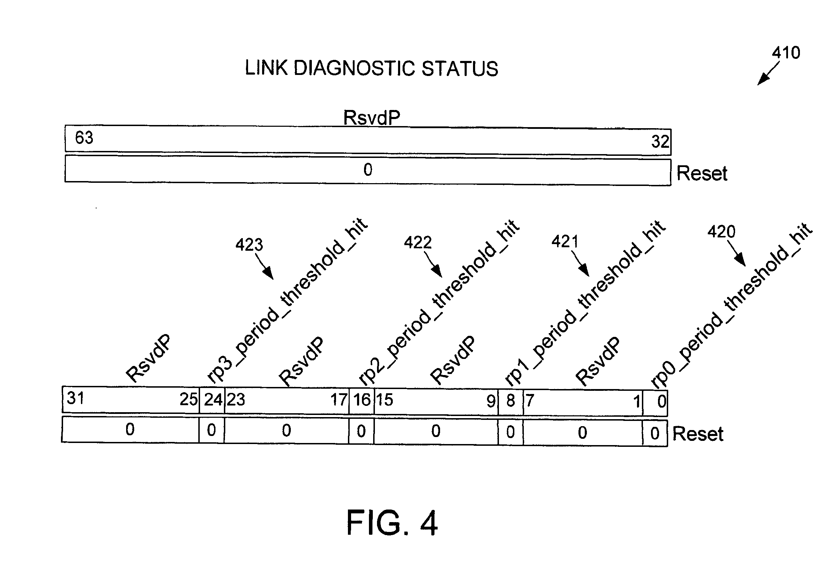

The set of status registers 138 used to control aspects of diagnostic logic 134 may further include a Link Diagnostic Status register. The Link Diagnostic Status register 410 (see FIG. 4) provides aggregate information about the diagnostic state of all links 160. When set, each particular bit in this register 410 indicates that the current value of the period_cnt field 360 in the Link Diagnostic Status & Control register 310 for the corresponding RP has reached the period_threshold value 350 (e.g., the event_cnt field 320 has reached or exceeded the specified event_threshold 340 in each of period_threshold 350 consecutive diagnostic windows). Once set, the bit is cleared again by software writing a 1 to the reset_cnts 385 bit of the Link Diagnostic Status & Control register 310. This resets all the period and event counts for the RP and enables further counting.

When set, a rpX_period_threshold_hit value (420, 421, 422, 423) for the Link Diagnostic Status register 410 indicates that the period_cnt counter in RPX's Link Diagnostic Status & Control register 310 has reached its specified threshold (e.g., period_threshold 350).

In the above example, a period counter counts consecutive periods where the event threshold has been exceeded or reached. In other embodiments, consecutive periods may not be a requirement. Rather, a rule may be implemented that stipulates a fraction of periods (e.g., X out of Y periods, where X < Y, *i.e.* X/Y) that are tracked to determine whether the event threshold has been exceeded or matched for periods meeting or exceeding the defined requirement. The fraction value should be large enough to avoid noise events occurring which will give a false positive result.

As previously described, programmable thresholds are implemented in one or more embodiments. This allows a variety of error rates to be handled by (e.g., programming a different threshold) the diagnostic logic 134 for different architectures and communication link technologies.

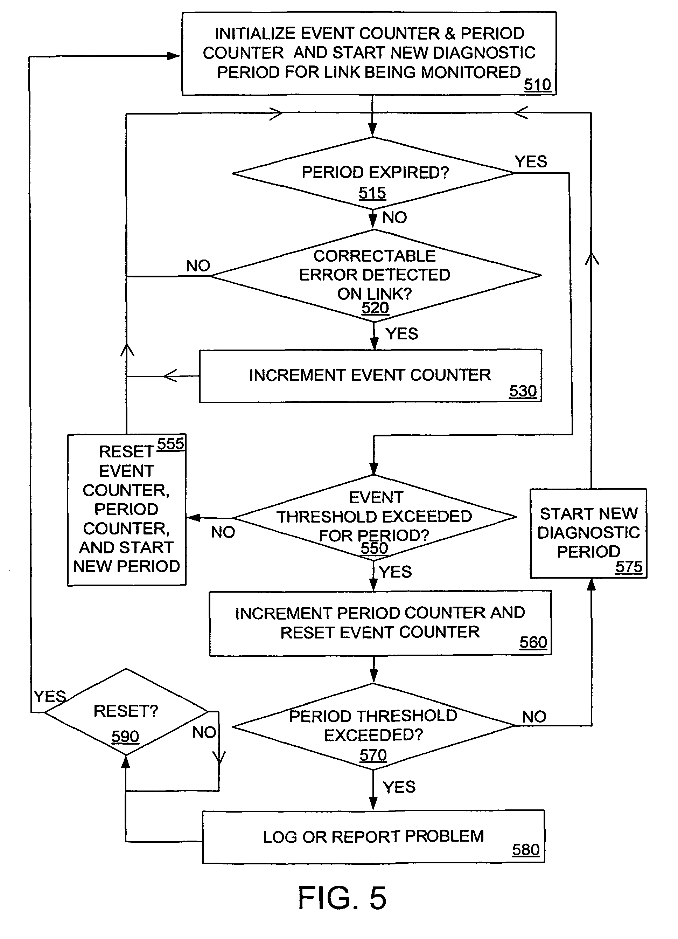

Referring now to FIG. 5, a flow chart describing a process of diagnostic operation of one embodiment of the diagnostic logic 134 is depicted. In block 510, an event counter is initialized to zero and a period counter is initialized to zero. The event counter counts the occurrences of certain events on a communication link being monitored during a current diagnostic period or window. The types of events that can be counted include correctable errors such as Bad TLP, Bad DLLP, Receiver Error (these three events are detected/triggered by the inbound link logic), and NAK Received and Replay Timer Timeout (these two are detected by the outbound link logic). The period counter, in one embodiment, counts the number of the consecutive diagnostic windows immediately preceding the current window in which the event counter has matched or exceeded a defined event threshold value.

In block 515, status of the diagnostic window or period is checked to determine if the period has expired. If the period has not expired then the process checks whether a correctable error has been detected (block 520) during the period. Otherwise, if the period has expired, the event counter is checked (block 550) to determine if the current value of the event counter matches or exceeds the event threshold for the recently expired period.

Accordingly, in block 520, when a correctable error has been detected on the communication link, the event counter is incremented (block 530). If a correctable error has not been detected, then the process checks again on whether the current diagnostic period has expired (block 515).

After the period has expired, the event counter is checked (block 550) to determine if the current value of the event counter matches or exceeds the event threshold for the recently expired period. When the current value of the event counter matches/exceeds the event threshold for the recently expired period, the period counter is incremented and the event counter is reset (e.g., set to 0) for use in the next period to be measured, in block 560. Otherwise, if the current value of the event counter does not match/exceed the event threshold for the recently expired period, a new diagnostic period is started, the event counter is reset (e.g., set to 0), and the period counter is reset (e.g., set to 0), as shown in block 555. After resetting these values, the process checks again on whether the current diagnostic period has expired (block 515).

In block 570, after incrementing the period counter, a check is done (block 570) to determine whether the current value of the period counter matches or exceeds a defined period threshold value. If the period threshold has not been matched/exceeded, a new diagnostic period is started (block 575). After resetting these values, the process checks again on whether the current diagnostic period has expired (block 515). Otherwise, when the current value of the period counter matches or exceeds a defined period threshold value, then a problem has been realized on the communication link being monitored and an indication of the problem is logged or reported to a user or higher level of software/hardware, as depicted in block 580. After discovery of a problem, detection of further errors on the communication link is stopped until a command is received to restart or reset the process, as indicated in block 590. When such a command is received, then the process restarts (as shown in block 510).

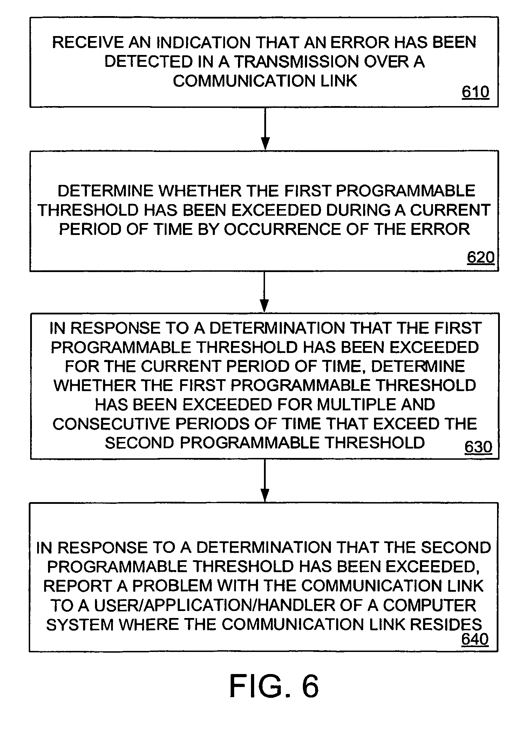

Referring next to FIG. 6, a flow chart describing a process of diagnostic operation of one embodiment of the diagnostic logic 134 is described. In block 610, diagnostic logic 134 or other logic component receives an indication that an error (e.g., correctable error) has been detected in a transmission over a communication link 160. The diagnostic logic 134 or other logic component will then determine whether transmission errors have occurred on a communication link being monitored and determine whether the number of transmission errors exceeds (or matches) a first programmable threshold (e.g., event threshold), where this programmable threshold has been exceeded (or matched) over a consecutive number of periods that exceeds (or matches) a second programmable threshold (*e.g*., period threshold).

Accordingly, the diagnostic logic 134, as an example, determines whether the first programmable threshold has been exceeded (or matched) during a current period of time by occurrence of the error, in block 620. In response to a determination that the first programmable threshold has been exceeded (or matched) for the current period of time, the diagnostic logic 134, as an example, determines whether the first programmable threshold has been exceeded (or matched) for multiple and consecutive periods of time that exceed (or match) the second programmable threshold, in block 630. Next, in response to a determination that the second programmable threshold has been exceeded (or matched), the diagnostic logic 134, as an example, reports a problem with the communication link to a user/application/handler of a computer system where the communication link resides, as depicted in block 640.

The diagnostic component or logic 134 of embodiments of the present disclosure can be implemented in hardware, software, firmware, or a combination thereof. If implemented in hardware, as in one embodiment, the diagnostic component 134 can be implemented with any or a combination of the following technologies, which are all well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

If implemented in software or firmware, the diagnostic logic 134 may be stored in a memory and that is executed by a suitable instruction execution system. Diagnostic component or logic 134 may also comprise in one embodiment an ordered listing of executable instructions for implementing logical functions, which can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In the context of this document, a "computer-readable medium" includes a means that can contain, store, communicate, or transport the program for use by or in connection with the instruction execution system, apparatus, or device. The computer readable medium can be, for example but not limited to, an electronic, magnetic, optical, electromagnetic, infrared, or semiconductor system, apparatus, or device. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM or Flash memory) (electronic), an optical fiber (optical), and a portable compact disc read-only memory (CDROM) (optical). In addition, the scope of the certain embodiments of the present disclosure includes embodying the functionality of the embodiments of the diagnostic component in logic embodied in hardware or software-configured mediums.

Any process descriptions or blocks in flow charts should be understood as representing modules, segments, or portions of code which include one or more executable instructions for implementing specific logical functions or steps in the process, and alternate implementations are included within the scope of the present disclosure in which functions may be executed out of order from that shown or discussed, including substantially concurrently or in reverse order, depending on the functionality involved, as would be understood by those reasonably skilled in the art.

It should be emphasized that the above-described embodiments of the present disclosure are merely possible examples of implementations, merely set forth for a clear understanding of the principles of the disclosure.

## Claims

1. A diagnostic system for analyzing reliability of a communication link comprising:
a link control component (110) that controls the communication link (160), the link control component coupled to a processor (120) and a diagnostic component (134),
the diagnostic component (120) configured to determine whether transmission errors have occurred on the communication link (160) exceeding or matching a first programmable threshold over a range of multiple periods of time that exceeds or matches a second programmable threshold;
wherein determination of transmission errors by the diagnostic component comprises determining, in response to detection of a correctable error on the communication link (160), whether the first programmable threshold has been exceeded or matched during a current period of time, the first programmable threshold being exceeded or matched when a current count of a number of errors that has occurred in the current period of time exceeds or matches the first programmable threshold; and **characterized in that**:
determination of transmission errors by the diagnostic component (134) comprises determining, in response to a determination that the first programmable threshold has been exceeded or matched for the current period of time, whether the first programmable threshold has been exceeded or matched over a range of multiple periods of time that exceeds or matches the second programmable threshold, the second programmable threshold being defined as a fraction of periods in which the first programmable threshold has been exceeded or matched, the second programmable threshold having a value smaller than 1.

2. The system of claim 1, wherein the diagnostic component is further configured to log an error indicating a sustained problem on the communication link, where the communication link has not been detected to have experienced an error indicating a hard failure of the communication link (160).

3. The system of claim 1, wherein the communication link (160) comprises a serial link in a PCI Express platform and the diagnostic component (134) comprises a hardware component of a root complex device.

4. A method of analyzing reliability of a communication link comprising:
receiving an indication that an error has been detected in a transmission over the communication link (160); and
determining whether transmission errors have occurred on the communication link (160) exceeding or matching a first programmable threshold over a range of multiple periods of time that exceeds or matches a second programmable threshold, the first programmable threshold and the second programmable threshold being determined from register values (138);
wherein the determining operation further comprises:
determining whether the first programmable threshold has been exceeded or matched during a current period of time, the first programmable threshold being exceeded or matched when a current count of a number of errors that has occurred in the current period of time exceeds or matches the first programmable threshold; and **characterized by**:
in response to a determination that the first programmable threshold has been exceeded or matched for the current period of time, determining whether the first programmable threshold has been exceeded or matched over a range of multiple periods of time that exceeds or matches a second programmable threshold, the second programmable threshold being defined as a fraction of periods in which the first programmable threshold has been exceeded or matched, the second programmable threshold having a value smaller than 1.

## Patentansprüche

1. Diagnosesystem zum Analysieren der Zuverlässigkeit einer Nachrichtenverbindung, umfassend:
eine Verbindungssteuerungskomponente (110), die die Nachrichtenverbindung (160) steuert, wobei die Verbindungssteuerungskomponente an einen Prozessor (120) und eine Diagnosekomponente (134) gekoppelt ist,
wobei die Diagnosekomponente (120 dazu konfiguriert ist, zu bestimmen, ob Übertragungsfehler auf der Nachrichtenverbindung (160) aufgetreten sind, die einen ersten programmierbaren Schwellwert über einen Bereich mehrerer Zeiträume überschreiten oder erreicht haben, der einen zweiten programmierbaren Schwellwert überschreitet oder erreicht hat,
wobei die Bestimmung von Übertragungsfehlern durch die Diagnosekomponente das Bestimmen - als Reaktion auf die Erkennung eines korrigierbaren Fehlers auf der Nachrichtenverbindung (160) - umfasst, ob der erste programmierbare Schwellwert während eines aktuellen Zeitraums überschritten oder erreicht wurde, wobei der erste programmierbare Schwellwert überschritten oder erreicht wird, wenn ein aktueller Zählwert einer Anzahl von Fehlern, die in dem aktuellen Zeitraum aufgetreten ist, den ersten programmierbaren Schwellwert überschreitet oder erreicht; und **dadurch gekennzeichnet, dass**:
die Bestimmung von Übertragungsfehlern durch die Diagnosekomponente (134) das Bestimmen - als Reaktion auf eine Bestimmung, dass der erste programmierbare Schwellwert für den aktuellen Zeitraum überschritten oder erreicht wurde - umfasst, ob der erste programmierbare Schwellwert über einen Bereich mehrerer Zeiträume, der den zweiten programmierbaren Schwellwert überschreitet oder erreicht hat, überschritten oder erreicht wurde, wobei der zweite programmierbare Schwellwert als ein Bruchteil von Zeiträumen definiert ist, in dem der erste programmierbare Schwellwert überschritten oder erreicht wurde, wobei der zweite programmierbare Schwellwert einen Wert aufweist, der kleiner als 1 ist.

2. Das System nach Anspruch 1, wobei die Diagnosekomponente ferner dazu konfiguriert ist, einen Fehler zu protokollieren, der auf ein Dauerproblem auf der Nachrichtenverbindung hinweist, wobei nicht erkannt wurde, dass bei der Nachrichtenverbindung ein Fehler aufgetreten ist, der auf einen Hardwarefehler der Nachrichtenverbindung (160) hinweist.

3. Das System nach Anspruch 1, wobei die Nachrichtenverbindung (160) eine serielle Verbindung in einer PCI-Express-Plattform umfasst und die Diagnosekomponente (134) eine Hardwarekomponente einer Root-Complex-Vorrichtung umfasst.

4. Verfahren zum Analysieren der Zuverlässigkeit einer Nachrichtenverbindung, umfassend:
Empfangen eines Hinweises, dass ein Fehler in einer Übertragung über die Nachrichtenverbindung (160) erkannt wurde; und
Bestimmen, ob Übertragungsfehler auf der Nachrichtenverbindung (160) aufgetreten sind, die einen ersten programmierbaren Schwellwert über einen Bereich mehrerer Zeiträume überschreiten oder erreicht haben, der einen zweiten programmierbaren Schwellwert überschreitet oder erreicht hat, wobei der erste programmierbare Schwellwert und der zweite programmierbare Schwellwert von Registerwerten (138) bestimmt werden;
wobei der Bestimmungsvorgang ferner Folgendes umfasst:
Bestimmen, ob der erste programmierbare Schwellwert während eines aktuellen Zeitraums überschritten oder erreicht wurde, wobei der erste programmierbare Schwellwert überschritten oder erreicht wird, wenn ein aktueller Zählwert einer Anzahl von Fehlern, die in dem aktuellen Zeitraum aufgetreten ist, den ersten programmierbaren Schwellwert überschreitet oder erreicht; und **gekennzeichnet durch**:
als Reaktion auf eine Bestimmung, dass der erste programmierbare Schwellwert für den aktuellen Zeitraum überschritten oder erreicht wurde, Bestimmen, ob der erste programmierbare Schwellwert über einen Bereich mehrerer Zeiträume, der einen zweiten programmierbaren Schwellwert überschreitet oder erreicht hat, überschritten oder erreicht wurde, wobei der zweite programmierbare Schwellwert als ein Bruchteil von Zeiträumen definiert ist, in dem der erste programmierbare Schwellwert überschritten oder erreicht wurde, wobei der zweite programmierbare Schwellwert einen Wert aufweist, der kleiner als 1 ist.

## Revendications

1. Système de diagnostic pour analyser la fiabilité d'une liaison de communication comprenant :
un composant de commande de liaison (110) qui commande la liaison de communication (160), le composant de commande de liaison étant couplé à un processeur (120) et un composant de diagnostic (134),
le composant de diagnostic (120) configuré pour déterminer si des erreurs de transmission se sont produites sur la liaison de communication (160) dépassant ou égalant un premier seuil programmable sur une plage de multiples périodes de temps qui dépasse ou égale un second seuil programmable ;
la détermination d'erreurs de transmission par le composant de diagnostic comprenant la détermination, en réponse à la détection d'une erreur corrigeable sur la liaison de communication (160), si le premier seuil programmable a été dépassé ou égalé pendant une période de temps courante, le premier seuil programmable étant dépassé ou égalé lorsqu'un compte courant d'un nombre d'erreurs qui se sont produites dans la période de temps courante dépasse ou égale le premier seuil programmable ; et **caractérisé par le fait que** :
la détermination d'erreurs de transmission par le composant de diagnostic (134) comprend la détermination, en réponse à une détermination que le premier seuil programmable a été dépassé ou égalé pendant la période de temps courante, si le premier seuil programmable a été dépassé ou égalé sur une plage de multiples périodes de temps qui dépasse ou égale le second seuil programmable, le second seuil programmable étant défini en tant que fraction de périodes dans lesquelles le premier seuil programmable a été dépassé ou égalé, le second seuil programmable ayant une valeur plus petite que 1.

2. Système selon la revendication 1, dans lequel le composant de diagnostic est en outre configuré pour enregistrer une erreur indiquant un problème prolongé sur la liaison de communication, la liaison de communication n'ayant pas été détectée comme ayant subi une erreur indiquant une défaillance permanente sur la liaison de communication (160).

3. Système selon la revendication 1, dans lequel la liaison de communication (160) comprend une liaison série dans une plateforme PCI Express et le composant de diagnostic (134) comprend un composant matériel d'un dispositif de complexe racine.

4. Procédé d'analyse de la fiabilité d'une liaison de communication comprenant :
recevoir une indication qu'une erreur a été détectée dans une transmission sur une liaison de communication (160) ; et
déterminer si des erreurs de transmission se sont produites sur la liaison de communication (160) dépassant ou égalant un premier seuil programmable sur une plage de multiples périodes de temps qui dépasse ou égale un second seuil programmable, le premier seuil programmable et le second seuil programmable étant déterminés à partir de valeurs de registre (138) ;
l'opération de détermination comprenant en outre :
déterminer si le premier seuil programmable a été dépassé ou égalé pendant une période de temps courante, le premier seuil programmable étant dépassé ou égalé lorsqu'un compte courant d'un nombre d'erreurs qui se sont produites dans la période de temps courante dépasse ou égale le premier seuil programmable ; et **caractérisé par** :
en réponse à une détermination que le premier seuil programmable a été dépassé ou égalé pendant la période de temps courante, déterminer si le premier seuil programmable a été dépassé ou égalé sur une plage de multiples périodes de temps qui dépasse ou égale un second seuil programmable, le second seuil programmable étant défini en tant que fraction de périodes dans lesquelles le premier seuil programmable a été dépassé ou égalé, le second seuil programmable ayant une valeur plus petite que 1.
